# EUROPÄISCHE PATENTSCHRIFT

(11) **EP 0 278 429 B1**
(45) Veröffentlichungstag und Bekanntmachung des Hinweises auf die Patenterteilung: **21.04.1993**
(21) Anmeldenummer: 88101704.0
(22) Anmeldetag: 05.02.1988
(51) Int. Cl.: H04M 1/08, H04M 1/60

(54) **Teilnehmerstationsschaltung für Fernmelde-, insbesondere Fernsprechanlagen**
Circuit arrangement for a substation in telecommunication systems, especially in telephone systems
Circuit de poste d'abonné pour installations de télécommucation, plus spécialement pour installations téléphoniques

(30) Priorität: 06.02.1987 DE 3703682
(43) Veröffentlichungstag der Anmeldung: 17.08.1988
(73) Patentinhaber: Siemens Nixdorf Informationssysteme Aktiengesellschaft, 33102 Paderborn (DE)
(72) Erfinder: Obelode, Jürgen, D-4803 Steinhagen (DE); Laue, Hans-Bodo, D-4791 Altenbeken (DE)
(74) Vertreter: Fuchs, Franz-Josef, Dr.-Ing.

(56) Entgegenhaltungen:
- EP-A- 0 025 582
- DE-U- 3 120 283
- US-A- 3 881 069
- PATENT ABSTRACTS OF JAPAN, Band 7, nr. 236 (E-205)[1381], 20. Oktober 1983; & JP-A-58 124 358
- PATENT ABSTRACTS OF JAPAN, Band 9, Nr. 216 (E-340)[1939], 3. September 1985; & JP-A-60 77 561
- PATENT ABSTRACTS OF JAPAN, Band 10, Nr. 184 (E-415)[2240], 27. Juni 1986; & JP-A-61 30 850

## Beschreibung

Die Erfindung betrifft eine Teilnehmerstationsschaltung für Fernmelde-, insbesondere Fernsprechanlagen, mit einer durch Abheben bzw. Auflegen des Handapparates betätigbaren Umschaltvorrichtung mit mindestens zwei Umschaltkontakten und einer manuell betätigbaren Schaltervorrichtung zur Nachbildung der Funktion der Umschaltvorrichtung mit Hilfe eines bistabilen Relais, das durch Betätigen der Schaltervorrichtung setzbar und durch Auflegen des Handapparates oder durch nochmaliges Betätigen der Schaltervorrichtung rücksetzbar ist.

Die durch den Handapparat betätigbare Umschaltvorrichtung wird in Fernsprechteilnehmerstationsschaltungen auch als Gabelumschalter bezeichnet und dient dazu, bei aufliegendem Handapparat die Rufeinrichtung und bei abgehobenem Handapparat die Gabelschaltung zur Sprachübertragung bzw. die Wähleinrichtung mit der Teilnehmeranschlußleitung zu verbinden. Die zusätzliche manuell betätigbare Schaltervorrichtung ermöglicht dadurch, daß sie die Umschaltvorrichtung nachbildet, eine Wahl bei aufgelegtem Handapparat und kann auch Einrichtungen zum Lauthören und Freisprechen innerhalb der Fernsprechteilnehmerstation einschalten. Eine solche Teilnehmerstationsschaltung ist aus der DE-B-31 20 283 bekannt. Bei ihr wird die Funktion des Gabelumschalters durch ein bistabiles Relais nachgebildet, das zustandsabhängig von einer elektronischen Schaltung oder von einer dreipoligen Steuertaste angesteuert wird. Ein Kontakt dieses bistabilen Relais ist mit der Ruheseite eines Gabelumschaltkontaktes in Reihe geschaltet und kann dessen Funktion ersetzen.

Im Hinblick auf Spannungsfestigkeit und lange Lebensdauer müssen der Gabelumschaltkontakt und der Kontakt des bistabilen Relais Edelmetallkontakte sein. Ein weiterer Nachteil dieser Schaltungsanordnung ist die dreipolige Ausführung der Steuertaste, die eine Integration dieser Funktion in einfache Tastaturen verhindert. Weiter hat diese Schaltung noch den Nachteil, daß beim Beenden einer Verbindung mit aufgelegtem Handapparat durch zu lange Tastenbetätigung instabile Betriebszustände auftreten können.

Funktionen der vorstehend beschriebenen Art sind auch bei Teilnehmerstationsschaltungen erforderlich, die der Datenübertragung dienen, oder sie befinden sich in vergleichbaren Zusatzeinrichtungen von Fernmeldeanlagen.

Es ist Aufgabe der Erfindung, eine Teilnehmerstationsschaltung anzugeben, die die Funktion der Gabelumschaltung so einfach nachbildet, daß nur einpolige Steuerkontakte benötigt werden. Instabile Betriebszustände sollen vermieden werden.

Diese Aufgabe wird für eine Teilnehmerstationsschaltung eingangs genannter Art erfindungsgemäß dadurch gelöst, daß die Umschaltkontakte zu dem bistabilen Relais gehören und daß dieses auch durch Abheben des Handapparates setzbar ist.

Durch die Erfindung werden Gabelumschaltfunktionen und deren Nachbildung durch ein einziges Relais verwirklicht, das infolge seiner bistabilen Arbeitsweise nur während des Setz- und des Rücksetzvorganges elektrische Energie benötigt, während der Zeit zwischen diesen Schaltvorgängen aber die Stromquelle nicht belastet. Dies ist wichtig insbesondere bei solchen Teilnehmerstationen, die über die Teilnehmeranschlußleitung mit ihrem Betriebsstrom versorgt werden. Das bistabile Relais macht einen mechanisch aufwendigen Gabelumschalter mit mehreren Kontaktsätzen sowie eine mechanische Kopplung mit der zusätzlichen Schaltervorrichtung überflüssig. Arbeitskontakte zur Steuerung des bistabilen Relais können einfache Kontaktanordnungen ohne besondere Rastvorrichtungen sein. Über sie werden vergleichsweise schwache Signalströme geführt, die keinen besonders geringen Kontaktwiderstand vorschreiben. Da es sich lediglich um Steuerkontakte handelt, müssen sie keine Edelmetallkontakte sein, sondern sie können z.B. als Gummimattenkontakte mit Übergangswiderständen in der Größenordnung von 100 Ohm ausgeführt sein.

Vorteilhaft sind zum Setzen des bistabilen Relais ein durch Abheben des Handapparates betätigbarer erster Arbeitskontakt und ein die Schaltervorrichtung bildender zweiter Arbeitskontakt vorgesehen und ist der Rücksetzstromkreis des bistabilen Relais über eine Steuereinrichtung auf das Öffnen des ersten oder das nochmalige Schließen und anschließende Öffnen des zweiten Arbeitskontaktes hin einschaltbar. Die Steuereinrichtung wertet hierbei den Schaltzustand des ersten und des zweiten Arbeitskontaktes aus und kann abhängig davon einen Rücksetzimpuls an das bistabile Relais abgeben. Steuereinrichtungen dieser Art sind in modernen Teilnehmerstationen in Form von Mikroprozessoren ohnehin enthalten und dienen zur Steuerung weiterer Leistungsmerkmale wie beispielsweise Rufnummernspeicherung, Erzeugung eines akustischen Anrufsignals, Einschaltung von Lauthör- und Freisprecheinrichtungen, optische Informationsanzeige usw..

Eine Aktivierung der Teilnehmerstationsschaltung sollte nur im Ruhezustand möglich sein. Dies wird vorteilhaft dadurch erreicht, daß der mit der Teilnehmeranschlußleitung verbundene Steuerstromkreis des bistabilen Relais eine Schaltschwelle enthält, die ein Setzen des bistabilen Relais nur mit einer Spannung oberhalb der im Betrieb der Teilnehmerstation auf der Teilnehmeranschlußleitung herrschenden Spannung ermöglicht.

Die Teilnehmerstationsschaltung kann bei Speisung über die Teilnehmeranschlußleitung vorteilhaft derart aufgebaut sein, daß der mit der Teilnehmeranschlußleitung verbundene Stromkreis des bistabilen Relais einen Schalttransistor enthält, der durch die beiden Arbeitskontakte leitend steuerbar ist.

Diese Arbeitsweise ermöglicht eine besonders geringe Strombelastung der beiden Arbeitskontakte, da diese lediglich das steuernde Potential an den Schalttransistor anschalten müssen, nicht aber im Setzstromkreis des bistabilen Relais liegen. Dabei werden die beiden Arbeitskontakte so eingesetzt, daß sie die auf der Teilnehmeranschlußleitung herrschende Spannung an einen Basisspannungsteiler des Schalttransistors anschalten.

Die Verbindung der beiden Arbeitskontakte mit der Steuereinrichtung einerseits und dem Steuerstromkreis des Schalttransistors andererseits ist vorteilhaft derart getroffen, daß zwei Steuereingänge der Steuereinrichtung über erste Entkopplungsdioden und der Steuerstromkreis des Schalttransistors über zweite Entkopplungsdioden mit den beiden Arbeitskontakten verbunden sind. Hierdurch ist es möglich, den Betriebszustand der beiden Arbeitskontakte laufend mit der Steuereinrichtung zu überwachen und die daraus gewonnenen Informationen auch zur Steuerung weiterer Leistungsmerkmale auszunutzen.

Ein Ausführungsbeispiel der Erfindung sowie dessen Arbeitsweise wird im folgenden für eine Fernsprechteilnehmerstation beschrieben, die in den Figuren so weit dargestellt ist, wie es für das Verständnis der Erfindung erforderlich ist. In der Zeichnung zeigen:
Fig. 1 einen Teil einer Fernsprechteilnehmerstationsschaltung,
Fig. 2 einen Teil einer Steuerschaltung und
Fig. 3a Signalverläufe in der Steuerschaltung nach Fig. 2. und 3b

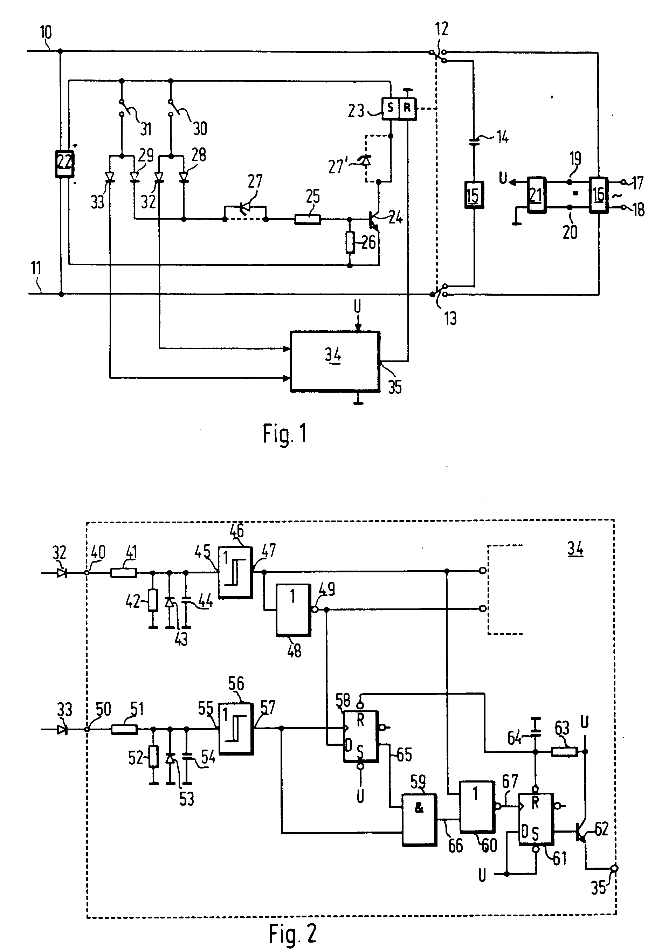

Die in Fig. 1 gezeigte Schaltungsanordnung ist an ihren Eingängen 10 und 11 mit den beiden Adern der Teilnehmeranschlußleitung (nicht dargestellt) verbunden, über die sie mit dem zu ihrem Betrieb erforderlichen Strom versorgt wird.

Die Eingänge 10 und 11 sind im Ruhezustand über zwei Gabelumschaltkontakte 12 und 13 mit der Reihenschaltung eines Kondensators 14 und einer Rufeinrichtung 15 verbunden, wie dies für Teilnehmerstationsschaltungen dieser Art bekannt ist. Die beiden Gabelumschaltkontakte 12 und 13 können in ihrem Arbeitszustand die Eingänge 10 und 11 bzw. die mit ihnen verbundene Teilnehmeranschlußleitung mit einer Entkopplungseinrichtung 16 für die Versorgungsspannung verbinden, deren Ausgänge 17 und 18 zu Schaltungsteilen für die Sprachübertragung und die Wählsignalerzeugung führen, welche in der Figur nicht dargestellt sind. Zwei weitere Ausgänge 19 und 20 sind mit einem Spannungsregler 21 verbunden, der eine Versorgungsspannung U gegenüber Masse abgibt.

Die vorstehend beschriebenen Elemente 17 bis 21 sind gleichfalls für Teilnehmerstationen der hier betrachteten Art an sich bekannt.

Die Eingänge 10 und 11 sind ferner mit einer Verpolungsschutzschaltung 22 verbunden, die z.B. eine Brückengleichrichterschaltung sein kann und die auf der Teilnehmeranschlußleitung herrschende Spannung an den Setzstromkreis eines bistabilen Relais 23 liefert, welches die Gabelumschaltkontakte 12 und 13 steuert, was in der Figur durch eine entsprechende gestrichtelte Verbindung angedeutet ist. Der Setzstromkreis des bistabilen Relais 23 enthält einen NPN-Schalttransistor 24, dessen Basisspannung an einem aus zwei Winderständen 25 und 26 gebildeten Spannungsteiler abgegriffen wird. Dieser Spannungsteiler ist über eine Zenerdiode 27 und zwei Entkopplungsdioden 28 und 29 mit einem ersten Arbeitskontakt 30 sowie mit einem zweiten Arbeitskontakt 31 verbunden, über die er an den positiven Anschluß der Verpolungsschutzschaltung 22 gelegt werden kann.

Die beiden Arbeitskontakte 30 und 31 sind über weitere Entkopplungsdioden 32 und 33 mit zwei Eingängen einer Steuerschaltung 34 verbunden, die durch die Spannung U gespeist wird und an ihrem Ausgang 35 ein Rücksetzsignal für das bistabile Relais 23 abgeben kann.

Parallel zu der Zenerdiode 27 ist eine gestrichelte Schaltungsverbindung eingezeichnet, die dann vorzusehen ist, wenn die Zenerdiode 27 durch eine gestrichelt dargestellte Zenerdiode 27' ersetzt ist, die in den Arbeitsstromkreis des Schalttransistors 24 eingefügt wird.

Die beiden Arbeitskontakte 30 und 31 sind für Betriebszustände der Teilnehmerstation betätigbar, die sich durch Abheben des Handapparates oder durch manuelle Schalterbetätigung ergeben. Bei der folgenden Funktionsbeschreibung der Schaltungsanordnung wird vorausgesetzt, daß der Arbeitskontakt 30 durch Abheben des Handapparats und der Arbeitskontakt 31 durch eine Schalttaste geschlossen werden kann.

Wird der Handapparat der Teilnehmerstation abgehoben, so wird der Arbeitskontakt 30 beschlossen, wodurch die dann auf der Teilnehmeranschlußleitung herrschende Spannung über die Entkopplungsdiode 28 und die Zenerdiode 27 an dem Spannungsteiler 25, 26 liegt. Wenn die Zenerdiode 27 so bemessen ist, daß ihre Zenerspannung innerhalb dieser Reihenschaltung überschritten wird, so fließt ein Strom durch dem Spannungsteiler 25, 26, durch den der Schalttransistor 24 leitend gesteuert wird und den Setzstromkreis für das bistabile Relais 23 schließt. Dadurch werden die beiden Gabelunschaltkontakte 12 und 13 umgeschaltet und verbinden die weiteren Komponenten der Fernsprechteilnehmerstation mit der Teilnehmeranschlußleitung, so daß deren Spannung infolge der nun größeren Belastung absinkt und die an der Zenerdiode 27 abfallende Spannung die Zenerspannung unterschreitet, wodurch der Strom durch den Spannungsteiler 25, 26 verschwindet und der Schalttransistor 24 wieder gesperrt wird. Infolge seiner bistabilen Arbeitsweise bleibt das bistabile Relais 23 jedoch im gesetzten Zustand, bis es später wieder rückgesetzt wird. Das Schließen des Arbeitskontaktes 30 wird über die Entkopplungsdiode 32 auch an einem Eingang der Steuerschaltung 34 wirksam, da an dieser nun die positive Spannung der Teilnehmeranschlußleitung liegt. Auch der Arbeitskontakt 31, der mit einer manuell betätigbaren Taste der Teilnehmerstation gekoppelt ist, löst durch sein Schließen die vorstehend beschriebenen Vorgänge aus, wie der Figur ohne weiteres zu entnehmen ist.

Da der Setzstromkreis des bistabilen Relais 23 abgeschaltet ist, wird in dem nun erreichten Schaltzustand, in dem sich die Gabelumschaltkontakte 12 und 13 in Arbeitsstellung befinden, von dem bistabilen Relais 23 keine Energie aufgenommen.

Wie bereits erläutert, überwacht nun die Steuerschaltung die Schaltzustände der beiden Arbeitskontakte 30 und 31 und kann abhängig davon weitere Steueraufgaben erfüllen, die insbesondere für digitale Fernsprechteilnehmerstationen an sich bekannt sind. Wenn beispielsweise der Arbeitskontakt 31 betätigt wurde und dabei der Arbeitskontakt 30 geöffnet ist, so kann dies durch die Steuerschaltung 34 dahingehend ausgewertet werden, daß eine Wahl bei aufgelegtem Handapparat durch Betätigen der mit dem Arbeitskontakt 31 verbundenen Taste angefordert wurde, die dann von der Steuerschaltung 34 zum Auslösen entsprechenden Steuervorgänge genutzt wird.

Befindet sich die Teilnehmerstation schon im Betriebszustand und wurde z.B. eine Wahl bei aufgelegtem Handapparat angefordert und danach der Handapparat abgehoben, so wurde zunächst der Arbeitskontakt 31 und danach der Arbeitskontakt 30 geschlossen. Dies kann die Steuerschaltung 34 dann so auswerten, daß durch sie die Fernsprecheinrichtung abgeschaltet wird, sobald der Handapparat abgehoben wird.

Eine ähnliche Steuerfunktion hat dann auch das Rücksetzsignal für das bistabile Relais 23, welches die Steuerschaltung 34 an ihrem Ausgang 35 abgibt. Soll eine bestehende Verbindung in der Teilnehmerstation beendet werden, so muß der Handapparat aufgelegt werden. Dadurch wird die Arbeitskontakt 30 geöffnet, wodurch die positive Spannung der Teilnehmeranschlußleitung an dem einen Steuereingang der Steuerschaltung 34 verschwindet. Soll eine Freisprechverbindung, bei der der Handapparat bereits aufliegt, beendet werden, so kann dies der Steuerschaltung 34 durch nochmaliges Betätigen des Arbeitskontaktes 31 mit der ihm zugeordneten Taste signalisiert werden.Beide so erhaltenen Kriterien kann die Steuerschaltung 34 zur Abgabe eines Rücksetzimpulses an ihrem Ausgang 35 werten, wodurch das bistabile Relais 23 rückgesetzt wird. Dabei kann eine Verzögerung zwischen dem Öffnen des Arbeitskontaktes 31 und der Abgabe des Rücksetzimpulses erzeugt werden, um instabile Schaltzustände zu vermeiden, und ein erneutes unerwünschtes Ansprechen der Teilnehmerstationsschaltung zu verhindern.

Dies könnte eintreten, wenn nur das Schließen des Arbeitskontaktes 31 als Rücksetzkriterum für das bistabile Relais 23 bei Wahl mit aufgelegtem Handapparat gewertet würde.

Bei geschlossenem Arbeitskontakt 31 würde zwar das bistabile Relais 23 rückgesetzt, jedoch steigt dann die Spannung auf der Teilnehmeranschlußleitung infolge der nun von ihr abgeschalteten Last wieder an, so daß die Schaltschwelle der Zenerdiode 27 wieder überschritten wird und des bistabile Relais 23 wieder gesetzt würde.

Wenn das bistabile Relais 23 rückgesetzt ist und damit die Gabelumschaltkontakte 12 und 13 wieder in ihre Ruhestellung gelangt sind, so steigt infolge der dann geringeren Belastung die Spannung auf der Teilnehmeranschlußleitung wieder auf ihren ursprünglichen Wert an, wodurch das bistabile Relais 23 wieder gesetzt werden kann, da dann an der Zenerdiode 27 bei Schließen eines der Arbeitskontakte 30 oder 31 wieder eine gegenüber ihrer Zenerspannung höhere Spannung abfällt.

Ein Schwelleneffekt vorbeschriebener Art kann auch mit der Zenerdiode 27' zwischen dem bistabilen Relais 23 und dem Schalttransistor 24 im Setzstromkreis erzeugt werden, so daß dann die beiden Entkopplungsdioden 28 und 29 direkt mit dem Widerstand 25 verbunden sind. Bei dieser Ausführungsform der Schatungsanordnung ist die Zenerdiode 27' dann so zu bemessen, daß das bistabile Relais 23 bei der höheren Spannung der Teilnehmeranschlußleitung anspricht, jedoch die durch erhöhte Belastung dann gesunkene Spannung der Teilnehmeranschlußleitung einen gegenüber der Zenerspannung der Zenerdiode 27' geringeren Spannungsabfall an dieser erzeugt, so daß der Setzstromkreis dadurch unterbrochen wird.

Fig.2 zeigt einen Teil der Steuerschaltung 34, mit dem die vorstehend geschilderten Funktionen erreicht werden. An einen Eingang 40 ist die Kathode der Diode 32 (Fig.1) angeschlossen. Dieser Eingang ist über einen Widerstand 41 mit dem Eingang 45 eines Pegelumsetzers 46, einem Widerstand 42, der Kathode einer Zenerdiode 43 und einem Kondensator 44 verbunden. Die zweiten Anschlüsse des Widerstandes 42, der Zenerdiode 43 und des Kondensators 44 liegen an Masse. Eine entsprechende Eingangsschaltung ist für einen Eingang 50, an den die Kathode der Diode 33 (Fig.1) angeschlossen ist, mit einem Widerstand 51, einem Widerstand 52, einer Zenerdiode 53, einem Kondensator 54 und einem Pegelumsetzer 56 vorgesehen. Der Ausgang 47 des Pegelumsatzers 46 ist mit den Eingängen einer Inverters 48, eines NOR-Gliedes 60 und eines weiteren nicht näher dargestellten Teils der Steuerschaltung 34 verbunden. Der Ausgang 49 des Inverters 48 ist mit dem Dateneingang D eines D-Flip-Flops 58 und dem nicht dargestellten Teil der Steuerschaltung 34 verbunden. Der Takteingang des D-Flip-Flops 58 ist mit dem Ausgang 57 des Pegelumsetzers 56 und einem Eingang eines UND-Gleides 59 verbunden. Der nicht invertierende Ausgang 65 des D-Flip-Flops 58 ist mit einem zweiten Eingang des UND-Gleides 59 verbunden. Dessen Ausgang 66 ist mit einem zweiten Eingang des NOR-Gliedes 60 verbunden. Der Ausgang 67 des NOR-Gliedes 60 ist mit dem Takteingang eines zweiten D-Flip-Flops 61 verbunden, dessen nicht invertierender Ausgang mit der Basis eines Transistors 62 verbunden ist. Der Emitter des Transistors 62 ist mit dem Steuerausgang 35 der Steuerschaltung 34 verbunden.

Der Kollektor des Transistors 62, der Dateneingang des D-Flip-Flops 61, die Setzeingänge der Flip-Flops 58 und 61 und ein Anschluß eines Widerstandes 63 sind an die Betriebsspannung U angeschlossen. Der zweite Anschluß des Widerstandes 63 ist mit den Rücksetzungseingängen R der D-Flip-Flops 58 und 61 und einem Kondensator 64 verbunden, dessen zweiter Anschluß an Masse liegt. Der Widerstand 63 und der Kondensator 64 bilden ein RC-Verzögerungsglied.

Bei der folgenden Funktionsbeschreibung werden die Vorgänge, die durch das Ein- und Ausschalten der Betriebsspannung U entstehen, nicht weiter beschrieben. Es wird davon ausgegangen, daß sich alle logischen Schaltglieder 48, 59 und 60 in einem stabilen Zustand befinden und die beiden D-Flip-Flop 58 und 61 durch das RC-Verzögerungsglied 63, 64 rückesetzt sind. Die Eingangsschaltungen aus den Widerständen 41, 42, 51, 52, den Kondensatoren 44, 54, den Zenerdioden 43, 53 und den Pegelumsetzern 46, 56 dienen der Tastenentprellung und der Spannungsbegrenzung.

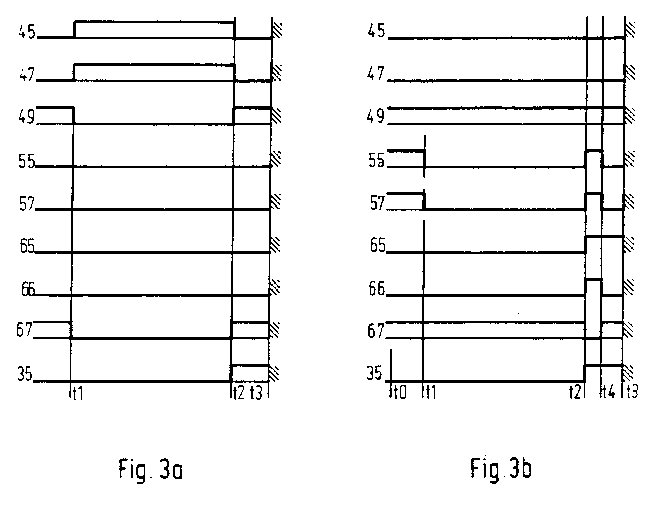

Zur Funktionsbeschreibung der Schaltung nach Fig.2 wird auf die Ablaufdiagramme nach Fig.3a und 3b Bezug genommen, in denen Signalverläufe in der Schaltung nach Fig.2 mit den dort jeweils verwendeten Bezugszeichen gekennzeichnet sind.

Wird zum Zeitpunkt t1 (Fig.3a) der Arbeitskontakt 30 (Fig.1) geschlossen, so entsteht am Eingang 45 des Pegelumsetzers 46 ein logisches 1-Signal. Dieses Signal erzeugt ein logisches 1-Signal am Ausgang 47 des Pegelumsetzers 46, das an die weitere, in Fig.2 nicht dargestellte Steuerschaltung weitergegeben wird und dieser signalisiert, daß der Handapparat der Teilnehmerstation abgehoben ist. Durch dasselbe Signal wird der Ausgang 67 des NOR-Gliedes 60 auf logisches 0-Signal geschaltet.

Wird zum Zeitpunkt t2 der Handapparat wieder aufgelegt und damit der Arbeitskontakt 30 wieder geöffnet, so erscheinen am Ein- und Ausgang 45 und 47 des Pegelumsetzers 46 logische 0-Signale. Durch diesen Signalwechsel schaltet das NOR-Glied 60 an seinem Ausgang auf logisches 1-Signal, und am Takteingang des D-Flip-Flops 61 entsteht eine positive Signalflanke. Mit dieser wird sein nicht invertierender Ausgang gesetzt und dadurch der Transistor 62 leitend gesteuert. Das bistabile Relais 23 (Fig.1) wird dadurch rückgesetzt. Zum Zeitpunkt t3 soll die Betriebsspannung U, die durch das Rücksetzen des bistabilen Relais 23 abgeschaltet wurde, so weit abgefallen sein, daß keine definierten Schaltzustände vorhanden sind.

In Fig.3b sind die Funktionsabläufe dargestellt, die durch Betätigen des Arbeitskontakten 31 (Fig.1) hervorgerufen werden.

Wird der Arbeitskontakt 31 zum Zeitpunkt t0 geschlossen, so erscheint am Ein- und Ausgang 55 und 57 des Pegelumsetzers 56 ein logisches 1-Signal. Der Ausgang 47 des Pegelumsetzers 46 bleibt auf logischem 0-Signal und damit der Ausgang 49 des Inverters 48 auf logischem 1-Signal. Dies zeigt dem nicht dargestellten Teil der Steuerschaltung an, daß eine Wahl bei aufgelegtem Handapparat stattfinden soll. Wird der Arbeitskontakt 31 zum Zeitpunkt t1 geöffnet, so erscheint am Ein- und Ausgang 55 und 57 des Pegelumsetzers 56 ein logischen 0-Signal.

Eine weitere Reaktion der Schaltung wird nicht veranlaßt. Erst wenn der Arbeitskontakt 31 zum Zeitpunkt t2 wieder geschlossen wird, setzt die damit verursachte positive Flanke am Takteingang des D-Flip-Flops 58 dessen nicht invertierenden Ausgang 65 auf logisches 1-Signal. Damit wird auch der Ausgang 66 des UND-Gliedes 59 auf logisches 1-Signal und der Ausgang 67 des NOR-Gliedes 60 auf logisches 0-Signal gebracht. Mit dem Öffnen des Arbeitskontaktes 31 zum Zeitpunkt t4 entsteht am Takteingang des D-Flip-Flops 61 eine positive Flanke, mit der es am nicht invertierenden Ausgang gesetzt wird und den Transistor 62 leitend steuert. Zum Zeitpunkt t3 ist, wie vorher beschrieben, die Betriebsspannung U auf Null abgefallen.

Nach dem Zeitpunkt t3 werden in beiden vorstehend betrachteten Fällen die D-Flip-Flops 58 und 60 zeitverzögert rückgesetzt.

## Patentansprüche

1. Teilnehmerstationsschaltung für Fernmelde-, insbesondere Fernsprechanlagen, mit einer durch Abheben bzw. Auflegen des Handapparates betätigbaren Umschaltvorrichtung mit mindestens zwei Umschaltkontakten (12, 13) und einer manuell betätigbaren Schaltervorrichtung zur Nachbildung der Funktion der Umschaltvorrichtung mit Hilfe eines bistabilen Relais (23), das durch Betätigen der Schaltervorrichtung setzbar und durch Auflegen des Handapparates oder durch nochmaliges Betätigen der Schaltervorrichtung rücksetzbar ist, dadurch **gekennzeichnet**, daß die Umschaltkontakte (12, 13) zu dem bistabilen Relais (23) gehören und daß dieses auch durch Abheben des Handapparates (30) setzbar ist.

2. Teilnehmerstationsschaltung nach Anspruch 1, dadurch **gekennzeichnet**, daß zum Setzen des bistabilen Relais (23) ein durch Abheben des Handapparates betätigbarer erster Arbeitskontakt (30) und ein die Schaltervorrichtung bildender zweiter Arbeitskontakt (31) vorgesehen sind und daß der Rücksetzstomkreis des bistabilen Relais (23) über eine Steuereinrichtung (34) auf das Öffnen des ersten (30) oder das nochmalige Schließen und anschließende Öffnen des zweiten Arbeitskontaktes (31) hin einschaltbar ist.

3. Teilnehmerstationsschaltung nach Anspruch 2, die über die Teilnehmeranschlußleitung gespeist wird, dadurch **gekennzeichnet**, daß je ein Anschluß der Arbeitskontakte (30, 31) über eine Verpolungsschutzschaltung (22) mit der Teilnehmeranschlußleitung verbunden ist.

4. Teilnehmerstationsschaltung nach Anspruch 1, 2 oder 3, dadurch **gekennzeichnet**, daß der mit der Teilnehmeranschlußleitung verbundene Setzstromkreis der bistabilen Relais (23) eine Schaltschwelle (27 bzw. 27') enthält, die ein Setzen des bistabilen Relais (23) nur mit einer Spannung oberhalb der im Betrieb auf der Teilnehmeranschlußleitung herrschenden Spannung ermöglicht.

5. Teilnehmerstationsschaltung nach einem der Ansprüche 2 bis 4, dadurch **gekennzeichnet**, daß der mit der Teilnehmeranschlußleitung verbundene Setzstromkreis des bistabilen Relais (23) einen Schalttransistor (24) enthält, der durch die beiden Arbeitskontakte (30, 31) leitend steuerbar ist.

6. Teilnehmerstationsschaltung nach Anspruch 4 oder 5, dadurch **gekennzeichnet**, daß der Steuerstromkreis des Schalttransistors (24) die Schaltschwelle (27) enthält.

7. Teilnehmerstationsschaltung nach Anspruch 5 oder 6, dadurch **gekennzeichnet**, daß die beiden Arbeitskontakte (30, 31) die auf der Teilnehmeranschlußleitung herrschende Spannung an einen Basisspannungsteiler (25, 26) des Schalttransistors (24) anschalten.

8. Teilnehmerstationsschaltung nach Anspruch 7, dadurch **gekennzeichnet**, daß zwei Steuereingänge (40, 50) der Steuereinrichtung (34) über erste Entkopplungsdioden (32, 33) und der Steuerstromkreis des Schalttransistors (24) über zweite Entkopplungsdioden (28, 29) mit den beiden Arbeitskontakten (30, 31) verbunden sind.

9. Teilnehmerstationsschaltung nach einem der Ansprüche 2 bis 8, dadurch **gekennzeichnet**, daß die Steuereinrichtung (34) einen Steuerausgang (35) aufweist, der durch das Ausgangssignal einer bistabilen Schaltung (61) aktiviert wird, deren Takteingang durch ein NOR- Glied (60) gesteuert wird, das einerseits durch den ersten Arbeitskontakt (30), andererseits durch ein UND- Glied (59) angesteuert wird, welches die mit dem zweiten Arbeitskontakt (31) erzeugten Signale und die Ausgangssignale einer weiteren bistabilen Schaltung (58) verknüpft, die am Takteingang mit den Signalen des zweiten Arbeitskontaktes (31) und am Dateneingang (D) mit den invertierten Signalen des ersten Arbeitskontaktes (30) angesteuert wird.

10. Teilnehmerstationsschaltung nach Anspruch 9, dadurch **gekennzeichnet**, daß die bistabilen Schaltungen (58, 61) zeitverzögert rücksetzbar sind.

11. Teilnehmerstationsschaltung nach Anspruch 8, dadurch **gekennzeichnet**, daß als Rücksetzkriterium für die bistabilen Schaltungen (58, 61) das Verschwinden einer mit den bistabilen Relais (23) geschalteten Spannung dient.

## Claims

1. Subscriber station circuit for telecommunications systems, preferably telephone systems, having a switchover device which can be activated by lifting or replacing the handset and has at least two switchover contacts (12, 13) and a switch means that can be manually activated for simulating the function of the switchover device with the assistance of a bistable relay (23), which can be set by activating the switch means and reset by replacing the handset or by activating the switch means again, characterised in that the switchover contacts (12, 13) belong to the bistable relay (23), and in that the latter can also be set by lifting the handset (30).

2. Subscriber station circuit according to Claim 1, characterised in that there are provided for setting the bistable relay (23) a first make contact (30) that can be activated by lifting the handset and a second make contact (31) forming the switch means, and in that the reset circuit of the bistable relay (23) can be switched on via a control device (34) following the opening of the first (30) or the closing again and subsequent opening of the second make contact (31).

3. Subscriber station circuit according to Claim 2, which is supplied with power via the subscriber line, characterised in that in each case one terminal of the make contacts (30, 31) is connected to the subscriber line via a reverse voltage protection circuit (22).

4. Subscriber station circuit according to Claim 1, 2 or 3, characterised in that the set circuit of the bistable relay (23) connected to the subscriber line contains a switching threshold (27 and 27' respectively) which permits a setting of the bistable relay (23) only with a voltage above the voltage prevailing on the subscriber line during operation.

5. Subscriber station circuit according to one of Claims 2 to 4, characterised in that the set circuit of the bistable relay (23) connected to the subscriber line contains a switching transistor (24) which can be driven into the conductive state by the two make contacts (30, 31).

6. Subscriber station circuit according to Claim 4 or 5, characterised in that the control circuit of the switching transistor (24) contains the switching threshold (27).

7. Subscriber station circuit according to Claim 5 or 6, characterised in that the two make contacts (30, 31) connect the voltage prevailing on the subscriber line to a base voltage divider (25, 26) of the switching transistor (24).

8. Subscriber station circuit according to Claim 7, characterised in that two control inputs (40, 50) of the control device (34) are connected via first decoupling diodes (32, 33) and the control circuit of the switching transistor (24) is connected via second decoupling diodes (28, 29) to the two make contacts (30, 31).

9. Subscriber station circuit according to one of Claims 2 to 8, characterised in that the control device (34) has a control output (35) which is activated by the output signal of a bistable circuit (61), the clock input of which is controlled by a NOR element (60), which is driven on the one hand by the first make contact (30) and on the other hand by an AND element (59) that gates the signals generated by the second make contact (31) and the output signals of a further bistable circuit (58), which is driven at the clock input with the signals of the second make contact (31) and at the data input (D) with the inverted signals of the first make contact (30).

10. Subscriber station circuit according to Claim 9, characterised in that the bistable circuits (58, 61) can be reset with a time delay.

11. Subscriber station circuit according to Claim 8, characterised in that the disappearance of a voltage switched with the bistable relay (23) serves as reset criterion for the bistable circuits (58, 61).

## Revendications

1. Circuit de poste d'abonné pour des installations de télécommunications, notamment pour des installations téléphoniques, comportant un dispositif de commutation pouvant être actionné par décrochage ou raccrochage du combiné, comportant au moins deux contacts de commutation (12,13) et un dispositif interrupteur pouvant être actionné manuellement et servant à simuler la fonction du dispositif de commutation à l'aide d'un relais bistable (23) qui peut être positionné par l'actionnement du dispositif interrupteur et qui peut être ramené à l'état initial par raccrochage du combiné ou sous l'effet d'un actionnement supplémentaire du dispositif interrupteur, caractérisé par le fait que les contacts de commutation (12,13) font partie du relais bistable (23) et que ce dernier peut être également positionné par décrochage du combiné (30).

2. Circuit de poste d'abonné suivant la revendication 1, caractérisé par le fait que pour le positionnement du relais bistable (23), il est prévu un premier contact de travail (30), qui peut être actionné lors du décrochage du combiné, et un second contact de travail (31) qui forme le dispositif interrupteur, et que le circuit de remise à l'état initial du relais bistable (23) peut être activé par l'intermédiaire d'un dispositif de commande (34) lors de l'ouverture du premier contact de travail (30) ou lors de la fermeture réitérée et de l'ouverture ultérieure du second contact de travail (31).

3. Circuit de poste d'abonné suivant la revendication 2, qui est alimenté par l'intermédiaire de la ligne d'abonné, caractérisé par le fait que respectivement une borne des contacts de travail (30,31) est raccordée à la ligne d'abonné par l'intermédiaire d'un circuit (22) de protection contre une inversion de polarité.

4. Circuit de poste d'abonné suivant la revendication 1, 2 ou 3, caractérisé par le fait que le circuit de positionnement, qui est raccordé à la ligne d'abonné, du relais bistable (23) comporte une unité à seuil de commutation (27 ou 27') qui permet un positionnement du relais bistable (23) uniquement avec une tension supérieure à la tension régnant en fonctionnement dans la ligne d'abonné.

5. Circuit de poste d'abonné suivant l'une des revendications 2 à 4, caractérisé par le fait que le circuit de positionnement, qui est raccordé à la ligne d'abonné, du relais bistable (23) comporte un transistor de commutation (24) qui peut être placé à l'état conducteur par les deux contacts de travail (30,31).

6. Circuit de poste d'abonné suivant la revendication 4 ou 5, caractérisé par le fait que le circuit de commande du transistor de commutation (24) comporte l'unité à seuil de commutation (27).

7. Circuit de poste d'abonné suivant la revendication 5 ou 6, caractérisé par le fait que les deux contacts de travail (30,31) appliquent la tension, qui règne dans la ligne d'abonné, à un diviseur (25,26) de la tension de base du transistor de commutation (24).

8. Circuit de poste d'abonné suivant la revendication 7, caractérisé par le fait que deux entrées de commande (40,50) du dispositif de commande (34) sont raccordées, par l'intermédiaire de premières diodes de découplage (32,33), et le circuit de commande du transistor de commutation (24) est raccordé par l'intermédiaire de secondes diodes de découplage (28,29), aux deux contacts de travail (30,31).

9. Circuit de poste d'abonné suivant l'une des revendications 2 à 8, caractérisé par le fait que le dispositif de commande (34) posséde une sortie de commande (35) qui est activée par le signal de sortie d'un circuit bistable (61), dont l'entrée de cadence est commandée par un circuit NON-OU (60), qui est commandé, d'une part, par le premier contact de travail (30), et, d'autre part, par un circuit ET (59), qui combine les signaux produits par le second contact de travail (31) et les signaux de sortie d'un autre circuit bistable (58) qui est commandé, au niveau de l'entrée de cadence, par les signaux du second contact de travail (31) et, au niveau de l'entrée des données (D), par les signaux inversés du premier contact de travail (30).

10. Circuit de poste d'abonné suivant la revendication 9, caractérisé par le fait que les circuits bistables (58,61) peuvent être ramenés à l'état initial d'une manière retardée.

11. Circuit de poste d'abonné suivant la revendication 8, caractérisé par le fait qu'on utilise, comme critère de remise à l'état initial pour les bascules bistables (58,61), la disparition d'une tension appliquée avec le circuit bistable (23).
